# EUROPEAN PATENT APPLICATION

(11) **EP 4 675 615 A1**
(43) Date of publication of application: **07.01.2026**
(21) Application number: 25186105.0
(22) Date of filing: 30.06.2025
(51) Int. Cl.: G10L 15/26

(54) **INFORMATION PROCESSING SYSTEM, INFORMATION PROCESSING APPARATUS, INFORMATION PROCESSING METHOD, AND CARRIER MEANS**

(30) Priority: 04.07.2024 JP 2024108441
(71) Applicant: Ricoh Company, Ltd., Tokyo 143-8555 (JP)
(72) Inventor: Kogami, Kazuhiko, Yokohama, Kanagawa, 224-0035 (JP); Asakawa, Tomoya, Yokohama, Kanagawa, 224-0035 (JP)
(74) Representative: SSM Sandmair

(57) **Abstract**

An information processing system (1) comprising: an acquisition unit (512) configured to acquire speech uttered by a first participant and a second participant, the first participant and the second participant participating in a communication session; a text data acquisition unit (513) configured to acquire text data from the speech through speech recognition; an operation receiving unit (523) configured to receive a setting of an extraction item to be extracted from the text data; and an extraction result acquisition unit (514) configured to acquire an extraction result obtained by extracting first utterance information related to the extraction item from the text data.

## Description

### BACKGROUND

### Technical Field

The present disclosure relates to an information processing system, an information processing apparatus, an information processing method, and carrier means.

### Related Art

In the background information processing system, a plurality of terminal apparatuses communicate with each other by transmitting and receiving audio or transmitting and receiving content data including audio and video.

After communication, such as a meeting, minutes may be generated. Japanese Unexamined Patent Application Publication No. 2023-178758 discloses a technique for receiving a plurality of target agenda items in a meeting, detecting a boundary at which the target agenda items change in meeting document data based on the appearance of significant terms in the meeting document data, separating the meeting document data into sections for each target agenda item, and summarizing the content of the meeting for each target agenda item to generate minutes.

In the related art technique, however, it is difficult to set extraction items to be extracted from the content of communication. For example, in a case where the content of a meeting is summarized to generate minutes, various items to be extracted from the content of the meeting, such as a summary, a next step, and budget, authority, need, and timing (BANT) criteria, are considered as extraction items. While various extraction items are considered, minutes generated from the same content of the meeting are conventionally the same.

### SUMMARY

The present disclosure described herein provides an information processing system including an acquisition unit, a text data acquisition unit, an operation receiving unit, and an extraction result acquisition unit. The acquisition unit acquires speech uttered by a first participant and a second participant, the first participant and the second participant participating in a communication session. The operation receiving unit receives a setting of an extraction item to be extracted from the text data. The text data acquisition unit acquires text data from the speech through speech recognition. The extraction result acquisition unit acquires an extraction result obtained by extracting first utterance information related to the extraction item from the text data.

The present disclosure described herein provides an information processing apparatus including an acquisition unit, a text data acquisition unit, and an extraction result acquisition unit. The acquisition unit acquires speech uttered by a first participant and a second participant, the first participant and the second participant participating in a communication session. The text data acquisition unit acquires text data from the speech through speech recognition. The extraction result acquisition unit receives a setting of an extraction item to be extracted from the text data and acquires an extraction result obtained by extracting first utterance information related to the extraction item from the text data.

The present disclosure described herein provides an information processing method performed by an information processing apparatus, including acquiring speech uttered by a first participant and a second participant, the first participant and the second participant participating in a communication session; acquiring text data from the speech through speech recognition; receiving a setting of an extraction item to be extracted from the text data; and acquiring an extraction result obtained by extracting first utterance information related to the extraction item from the text data.

The present disclosure described herein provides carrier means carrying computer readable code for controlling a computer system to carry out the above-described method.

According to one aspect of the present disclosure, extraction items to be extracted from the content of communication can be set.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of an extraction result;
FIG. 2 is a diagram schematically illustrating an example of the operation flow for generation of a business negotiation report and an analysis report;
FIG. 3 is a diagram illustrating an example system configuration of an information processing system;
FIG. 4 is a diagram illustrating an example of a modified system configuration of the information processing system;
FIG. 5 is a diagram illustrating an example hardware configuration of a computer;
FIG. 6 is a diagram illustrating an example hardware configuration of a terminal apparatus;
FIG. 7 is a diagram illustrating an example functional configuration of the information processing system;
FIG. 8 is a diagram illustrating an example of extraction items and groups managed by an extraction result acquisition unit;
FIG. 9 is a sequence diagram illustrating an example of the flow of operations performed by the information processing system to generate a business negotiation report and an analysis report from uttered speech;
FIG. 10 is a flowchart illustrating an example of a process performed by the terminal apparatus in step S5 in FIG. 9;
FIGs. 11A and 11B are diagrams illustrating an example of operation screens of the terminal apparatus;
FIG. 12 is a transition diagram of an example of screens displayed on an administrator terminal to set an extraction item;
FIG. 13 is a diagram schematically illustrating an example of the operation flow for generation of a business negotiation report;
FIG. 14 is a flowchart illustrating an example of a process performed by a second analysis information generation unit to generate a business negotiation report;
FIG. 15 is a diagram illustrating an example of the business negotiation report;
FIG. 16 is a diagram illustrating an example of the business negotiation report as a continuation of FIG. 15;
FIG. 17 is a diagram schematically illustrating an example of the operation flow for generation of an analysis report;
FIG. 18 is a flowchart illustrating an example of a process performed by a first analysis information generation unit to generate an analysis report;
FIG. 19 is a diagram illustrating an example of an analysis report displayed on the terminal apparatus or the administrator terminal; and
FIG. 20 is a diagram illustrating an example of analysis report details displayed on the terminal apparatus or the administrator terminal.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

The following describes an information processing system and an information processing method performed by the information processing system according to an embodiment of the present disclosure.

### LLM Report

In the present embodiment, a large-scale language model (LLM) is used to analyze the content of communication. The content of the communication is input to the LLM, and the LLM generates data in the form of a report based on the insights. The data in the form of a report is referred to as an LLM report. The present embodiment describes two LLM reports: a business negotiation report (an example of second analysis information), and an analysis report (an example of first analysis information).

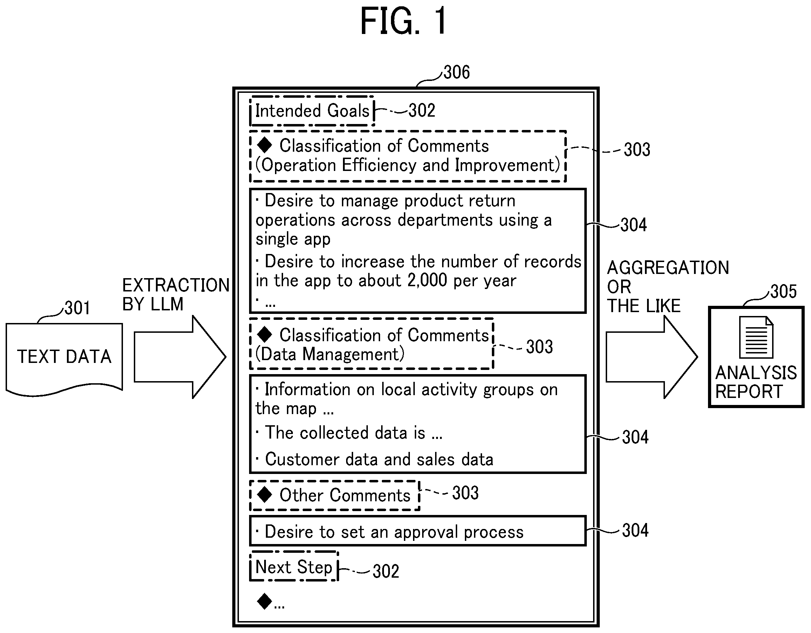

FIG. 1 is a diagram illustrating an example of an extraction result. For example, speech uttered during a meeting is converted into text data 301 by speech recognition. When an information processing apparatus described below inputs the text data 301 to the LLM, an extraction result 306 is returned. The extraction result 306 corresponds to a business negotiation report. Further, for example, the information processing apparatus aggregates the extraction result 306 and generates an analysis report 305.

The extraction result 306 includes an extraction item 302, a group 303, and detailed information 304 (an example of first utterance information). The extraction item 302, the group 303, and the detailed information 304 will now be described.

The extraction item 302 is main information to be used for extracting utterance information (the detailed information 304 described below) related to "specific information" from the text data 301. The extraction item 302 corresponds to the "specific information". The extraction item 302 may differ from customer to customer. Even for the same customer, the extraction item 302 can be customized.

The group 303 is information corresponding to a category according to which the utterance information extracted in the extraction item 302 is further subdivided. The group 303 may also differ from customer to customer. Even for the same customer, the group 303 can be customized.

The detailed information 304 is utterance information determined by the LLM to be related to the extraction item 302 and the group 303. The term "being related to" means stating the extraction item 302 and the group 303.

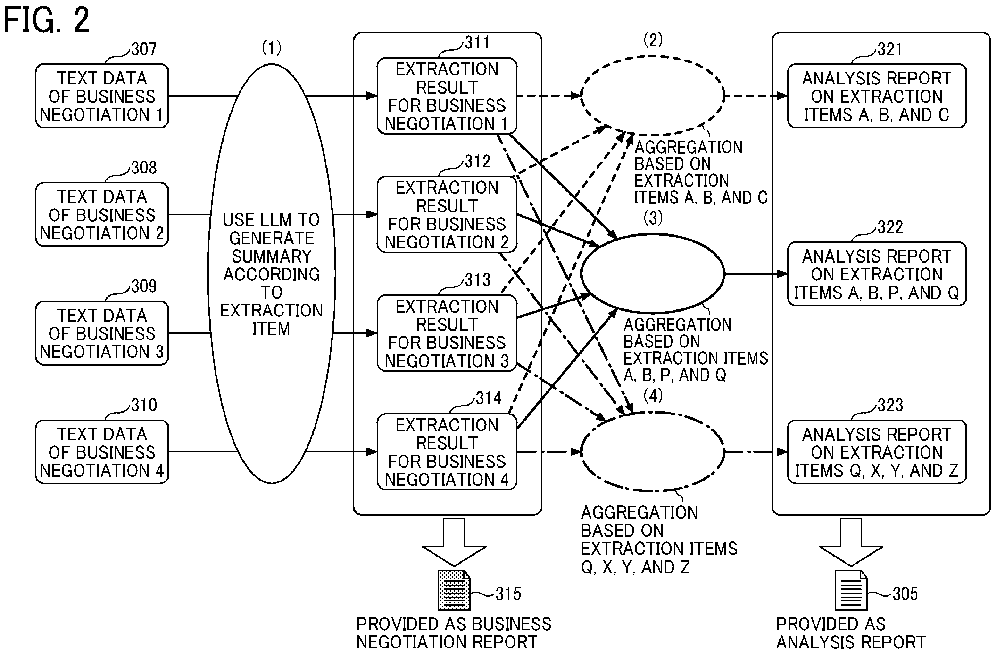

The operation flow for generation of a business negotiation report and an analysis report according to the present embodiment will be described with reference to FIG. 2. The information processing apparatus further performs a process such as aggregation on a plurality of extraction results 306 and generates the analysis report 305. Each of the extraction results 306 is generated from, for example, one business negotiation. FIG. 2 is a diagram schematically illustrating the operation flow for generation of a business negotiation report and an analysis report. A report that summarizes text data according to the extraction item 302 determined in advance is referred to as a "business negotiation report". Thus, the business negotiation report includes content equivalent to that of the extraction result 306 illustrated in FIG. 1, but is a formatted version of the extraction result 306. The extraction results 306 are aggregated to generate a report referred to as an "analysis report".
(1) As illustrated in FIG. 2, text data items 307 to 310 related to the content of four meetings, namely, meetings 1 to 4, are used to generate four extraction results, namely, extraction results 311 to 314, respectively. The extraction results 311 to 314 may be provided as individual business negotiation reports, or may be compiled into a single business negotiation report 315.
(2) As illustrated in FIG. 1, each of the extraction results 311 to 314 includes the extraction item 302, the group 303, and the detailed information 304. The information processing apparatus counts the number of detailed information elements 304 for each of preset extraction items A, B, and C from the plurality of extraction results 311 to 314. The information processing apparatus aggregates the number of detailed information elements 304 related to the extraction item A, the number of detailed information elements 304 related to the extraction item B, and the number of detailed information elements 304 related to the extraction item C to generate an analysis report 321 on the extraction items A, B, and C. Thus, the analysis report 321 is an aggregation of the respective numbers of detailed information elements 304 related to the extraction items A, B, and C from a plurality of business negotiations (an example of a plurality of communication sessions). That is, the analysis report 321 is a statistical analysis of the content of the plurality of business negotiations. Although not demonstrated in FIG. 2, the aggregation may be performed in units of groups 303.
(3) Also, the information processing apparatus aggregates the number of detailed information elements 304 for each of preset extraction items A, B, P, and Q from the plurality of extraction results 311 to 314 to generate an analysis report 322 on the extraction items A, B, P, and Q.
(4) Also, the information processing apparatus aggregates the number of detailed information elements 304 for each of preset extraction items Q, X, Y, and Z from the plurality of extraction results 311 to 314 to generate an analysis report 323 on the extraction items Q, X, Y, and Z.

The analysis reports 321 to 323 may be provided individually or may be compiled into an analysis report 305.

Specific examples of the business negotiation report and the analysis report are as follows. The business negotiation report is a summary of the minutes of one meeting (or business negotiation) according to a specific extraction item 302. The analysis report is a product report that collects insights on a product gathered from a plurality of meetings (or business negotiations). The analysis report is a marketing report that collects insights on the success or failure of marketing gathered from a plurality of meetings (or business negotiations). The analysis report is a sales report that collects insights on sales (e.g., sales representatives) gathered from a plurality of meetings (or business negotiations). The analysis report is a custom report that collects insights gathered from a plurality of meetings (or business negotiations) according to a customer-specific extraction item.

As described above, the information processing apparatus according to the present embodiment can generate a business negotiation report by formatting an extraction result 306 that summarizes the content of each business negotiation. The information processing apparatus can also generate an analysis report by aggregating extraction results 306 extracted from a plurality of business negotiations according to each extraction item 302 (and each group 303). A customer can change the extraction item 302 (and the group 303) to generate analysis reports based on various extraction items 302 (and groups 303). Thus, even for the same customer, any extraction item 302 (and group 303) can be designated to perform an analysis using various extraction items 302 (and groups 303), and an analysis result of a unique extraction item can be obtained.

### Terminology

The term "communication" refers to a process of transmitting ideas, thoughts, or the like from one person to another through words, gestures, facial expressions, or the like. Any form of communication may be used as long as two or more persons can interact with each other. The interaction may be online or face-to-face. The analysis method according to the present embodiment may also be applied to a seminar or the like in which one individual speaks to another (or others). Communication may be implemented as, for example, web-based communication sessions including a business negotiation, a meeting, therapy, telemedicine, a class, a remote lecture, a seminar, and counseling. Communication may be implemented as face-to-face meetings.

The term "extraction item" refers to main information to be used for extracting "specific information" from text data, as described above. The extraction item may be referred to as a point of view. Utterance information related to the extraction item is extracted from the text data.

The term "group" refers to a category according to which the extraction item is further subdivided, as described above. The group may be referred to as a subdivision, a subcategory, or the like. Utterance information related to the group is extracted from the text data.

The term "detailed information" refers to utterance information determined to be related to the extraction item or related to the extraction item and the group, as described above. The utterance information is a portion of the text data, and may be in a format of a sentence as appropriate. The utterance information or detailed information in a format of a sentence may also be referred to herein as an "utterance information element" or a "detailed information element". Segmentation of the utterance information from the text data is determined according to the number of words, a punctuation mark, context, and the like. The same detailed information may be determined to be related to another extraction item or group.

### Language Model

A language model is a model obtained by learning a large number of sentences spoken or written by humans and modeling the appearance probability of each word. The language model predicts, for each word, the probability of appearance of a word subsequent to the word. The large-scale language model has not only the function of the language model but also a function of understanding the context included in the text data. The term "context" refers to the circumstances or a background in which certain information is used, and is information that helps accurately identify the meaning of a sentence or a conversation. For example, whether the term "bank" is used as a money bank, a riverbank, or a data bank is determined based on the context.

The LLM understands the context, which enables various kinds of text analysis. The process flow of the LLM will be briefly described.
(1) First, the LLM divides text data into small units called tokens. The LLM divides a Japanese sentence into units called morphemes. The morphemes in Japanese are, for example, independent words. In English, a word or a punctuation mark may be a token.
(2) Then, the LLM vectorizes the tokens. Vectorization is also referred to as "embedding" or "abstract representation". The tokenized text data, that is, the tokens, is converted into numerical values. Vectorization allows a computer to mathematically process and analyze the text data. Even when the tokens have different numbers of characters, the vectors have a fixed length. Through the vectorization, each token corresponds to a point in a high-dimensional space.
(3) Then, the LLM causes the vectorized text data to pass through each layer of a neural network. The neural network includes an encoder and a decoder. The encoder generally outputs significant features of an input vector sequence. The encoder of the LLM uses an attention mechanism to output a vector including information indicating with which token each token appears, that is, information on a word around the token. The attention mechanism is a technique for calculating the degree of association of each element between two sequences. The decoder uses the attention mechanism to sequentially input the features (vectors) extracted by the encoder and generate a vector sequence.

During learning by the encoder and the decoder, a "fill in the blank" instance is generated from a text on the network, and a masked word is predicted. That is, self-supervised learning is performed. Since a word to be generated is given to the output of the decoder (a fully-connected layer and a softmax layer), the loss is propagated to learn parameters such as the weight and bias between nodes. After the learning of the LLM, fine-tuning is performed using small-scale learning data sets to construct a model suitable for tasks such as summarization, named entity extraction, translation, and interaction.
(4) Thus, when text data is input to the encoder and the decoder, the LLM can output, for example, a summary, extracted named entities, a translation, or an interaction.

### System Configuration

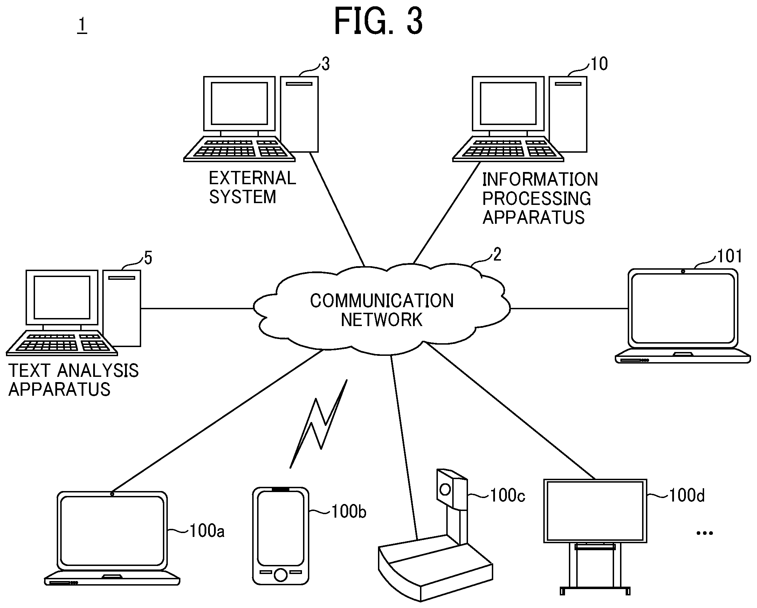

FIG. 3 is a diagram illustrating an example system configuration of an information processing system 1 according to an exemplary embodiment of the present disclosure. The information processing system 1 includes, for example, an external system 3, an information processing apparatus 10, a text analysis apparatus 5, a plurality of terminal apparatuses 100a, 100b, 100c, and 100d, and an administrator terminal 101, which are connected to a communication network 2 such as the Internet or a local area network (LAN). The external system 3 and the text analysis apparatus 5 may be excluded from the information processing system 1 as long as the information processing apparatus 10 can use the services of the external system 3 and the text analysis apparatus 5 as appropriate. In the following description, any terminal apparatus or terminal apparatuses among the plurality of terminal apparatuses 100a, 100b, 100c, and 100d are referred to as a "terminal apparatus 100" or "terminal apparatuses 100".

The information processing system 1 is, for example, a system for evaluating an online business negotiation (hereinafter simply referred to as a "business negotiation") performed by transmitting and receiving at least audio between terminal apparatuses 100. The online business negotiation is an example and may be a face-to-face business negotiation. In the case of a face-to-face business negotiation, it is desirable that speech uttered by participants participating in the business negotiation be acquired by a single terminal apparatus 100. The business negotiation is an example of a communication session. In the following description, it is assumed that the communication session is a business negotiation.

In one example, the terminal apparatus 100 is a general-purpose information terminal used by a participant participating in the business negotiation. Examples of the terminal apparatus 100 include a personal computer (PC), a tablet terminal, and a smartphone. In another example, the terminal apparatus 100 is a videoconferencing apparatus or an electronic apparatus having an online conferencing function, such as an interactive white board (IWB). The IWB is an electronic whiteboard with the capability of interactive communication and is also referred to as an electronic blackboard. In the following description, it is assumed that the terminal apparatus 100 is a general-purpose information terminal.

The external system 3 is a system that provides, for example, an online conferencing service, a sales support service, or an emotion estimation service. For example, a participant who is to participate in the business negotiation accesses an online conferencing service provided by the external system 3 by using, for example, an online conferencing application installed in the terminal apparatus 100 or a web browser, and can thus have a business negotiation with another participant online. In the present embodiment, the online conferencing service provided by the external system 3 may be any online conferencing service.

The information processing apparatus 10 can acquire various types of information from a sales support service provided by the external system 3. Examples of the information include business negotiation matter information, customer information, and information on activities of the sales staff. The sales support service is a service for supporting sales activities and is also referred to as "sales force automation (SFA)".

Further, the information processing apparatus 10 can acquire emotional information, such as the motivation of a participant participating in the business negotiation, using, for example, an emotion estimation service provided by the external system 3. The emotion estimation service is a service for estimating a change in emotion or mood from the voice, facial expression, or the like of a person by using, for example, an emotion estimation artificial intelligence (AI).

The information processing apparatus 10 is, for example, an information processing apparatus having the configuration of a computer, or a system including a plurality of computers. The information processing apparatus 10 acquires speech uttered by participants participating in the business negotiation, and evaluates the content of the business negotiation based on the acquired uttered speech.

The text analysis apparatus 5 provides a text analysis service for analyzing text data by using the LLM and generating an extraction result 306. The text analysis apparatus 5 makes an application programming interface (API) public. The information processing apparatus 10 invokes the API, allowing the information processing apparatus 10 to acquire the extraction result 306. The information processing apparatus 10 formats the extraction result 306 to generate a business negotiation report. For example, the information processing apparatus 10 aggregates a plurality of extraction results 306 to generate an analysis report 305.

The administrator terminal 101 is an information terminal such as a PC, a tablet terminal, or a smartphone used by the administrator or the like who manages a plurality of sales staff members. The administrator or the like can access the information processing apparatus 10 using the web browser or the like included in the administrator terminal 101 and display the evaluation results for the business negotiation, the analysis report, or the like provided by the information processing apparatus 10.

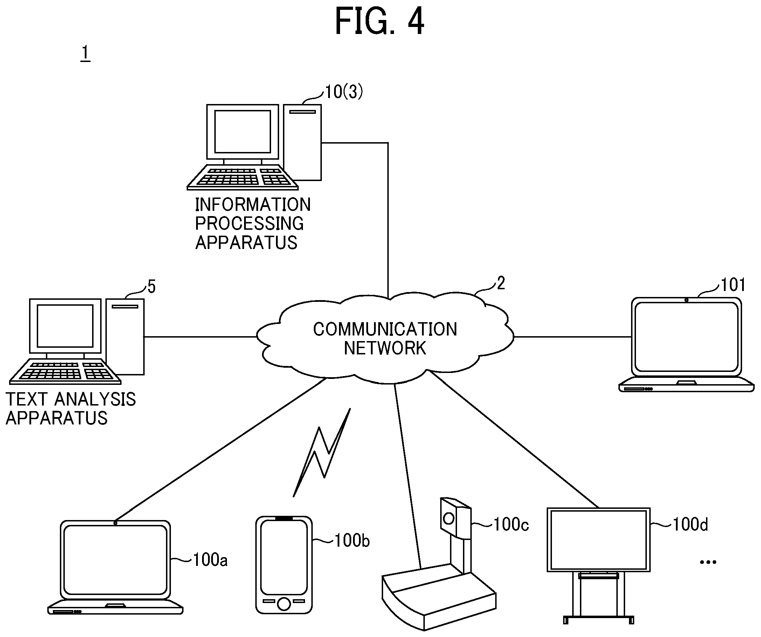

The system configuration of the information processing system 1 illustrated in FIG. 3 is an example. For example, at least some of the online conferencing service, the sales support service, and the emotion estimation service provided by the external system 3 may be included in the information processing apparatus 10. In this case, as illustrated in FIG. 4, the external system 3 may be omitted from the information processing system 1.

The information processing apparatus 10 may include the text analysis apparatus 5.

### Hardware Configuration

### Hardware Configuration of Computer

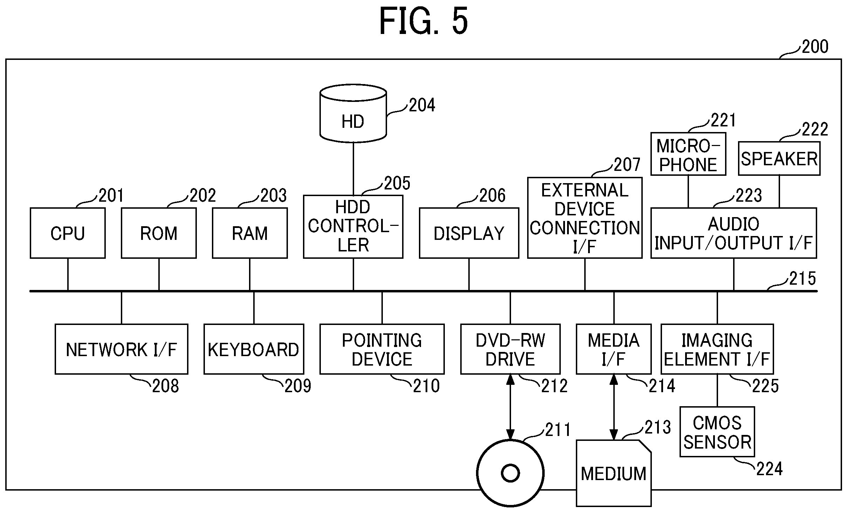

The external system 3, the information processing apparatus 10, and the administrator terminal 101 have, for example, a hardware configuration of a computer 200 as illustrated in FIG. 5. The external system 3 and the information processing apparatus 10 may be implemented by a plurality of computers 200. In one example, the terminal apparatus 100 may have the hardware configuration of the computer 200 as illustrated in FIG. 5.

FIG. 5 is a diagram illustrating an example hardware configuration of the computer 200. As illustrated in FIG. 5, the computer 200 includes, for example, a central processing unit (CPU) 201, a read only memory (ROM) 202, a random access memory (RAM) 203, a hard disk (HD) 204, a hard disk drive (HDD) controller 205, a display 206, an external device connection interface (I/F) 207, a network I/F 208, a keyboard 209, a pointing device 210, a digital versatile disc rewritable (DVD-RW) drive 212, a media I/F 214, and a bus line 215.

In a case where the computer 200 operates as the terminal apparatus 100, the computer 200 further includes, for example, a microphone 221, a speaker 222, an audio input/output I/F 223, a complementary metal oxide semiconductor (CMOS) sensor 224, and an imaging element I/F 225.

The CPU 201 controls the overall operation of the computer 200. The ROM 202 stores a program such as an initial program loader (IPL) used for booting the computer 200. The RAM 203 is used as a work area for the CPU 201. The HD 204 stores various data and programs such as an operating system (OS), applications, and device drivers. The HDD controller 205 controls reading and writing of various data from and to the HD 204 under the control of the CPU 201. The HD 204, which operates with the HDD controller 205, is an example of storage devices provided with the computer 200.

The display 206 displays various types of information such as a cursor, a menu, a window, characters, and an image. The display 206 may be provided external to the computer 200. The external device connection I/F 207 is an interface circuit that connects various external devices to the computer 200. The network I/F 208 is an interface circuit that connects the computer 200 to the communication network 2 to enable communication with other devices.

The keyboard 209 is one example of an input device provided with a plurality of keys for allowing a user to input characters, numerals, or various instructions. The pointing device 210 is one example of an input device used for, for example, selecting or executing various kinds of instructions, selecting a target for processing, or moving a cursor being displayed. The keyboard 209 and the pointing device 210 may be provided external to the computer 200.

The DVD-RW drive 212 controls reading and writing of various data from and to a DVD-RW 211, which is an example of a removable recording medium. Instead of the DVD-RW 211, any other recording medium may be used. The media I/F 214 controls reading and writing (storing) of data from and to a medium 213 such as a flash memory.

The microphone 221 is a built-in circuit that converts sound into an electrical signal. The speaker 222 is a built-in circuit that generates sound such as music or voice by converting an electrical signal into physical vibration. The audio input/output I/F 223 is a circuit that handles the input and output of audio signals between the microphone 221 and the speaker 222 under the control of the CPU 201.

The CMOS sensor 224 is an example of a built-in imaging device that captures an image of an object (e.g., an image of the user) under the control of the CPU 201 to obtain image data. The computer 200 may include any other imaging device such as a charge coupled device (CCD) sensor instead of the CMOS sensor 224. The imaging element I/F 225 is a circuit that controls driving of the CMOS sensor 224.

The bus line 215 includes an address bus, a data bus, various control signal lines, and the like for electrically connecting the components described above to one another. Hardware Configuration of Terminal Apparatus

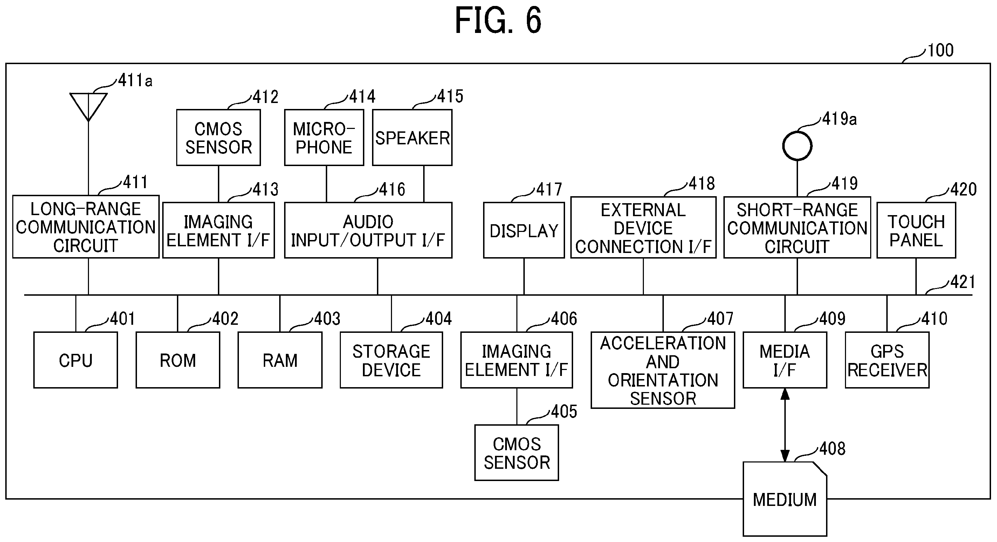

FIG. 6 is a diagram illustrating an example hardware configuration of the terminal apparatus 100 according to an embodiment of the present disclosure. An example hardware configuration of the terminal apparatus 100, which is an information terminal such as a smartphone or a tablet terminal, will be described. The terminal apparatus 100 may be, for example, a video conferencing apparatus or an electronic apparatus having the configuration of a computer and online conferencing function, such as an IWB. The administrator terminal 101 may have the hardware configuration of the terminal apparatus 100 as illustrated in FIG. 6.

In the example illustrated in FIG. 6, the terminal apparatus 100 includes, for example, a CPU 401, a ROM 402, a RAM 403, a storage device 404, a CMOS sensor 405, an imaging element I/F 406, an acceleration and orientation sensor 407, a media I/F 409, and a global positioning system (GPS) receiver 410.

The CPU 401 controls the overall operation of the terminal apparatus 100 by executing a predetermined program. The ROM 402 stores a program such as an IPL used for booting the CPU 401. The RAM 403 is used as a work area for the CPU 401. The storage device 404 is a large-capacity storage device that stores programs such as an OS and applications, as well as various data. The storage device 404 is implemented by, for example, a solid state drive (SSD) or a flash ROM.

The CMOS sensor 405 is an example of a built-in imaging device that captures an image of an object (mainly, an image of the user) under the control of the CPU 401 to obtain image data. The terminal apparatus 100 may include any other imaging device such as a CCD sensor instead of the CMOS sensor 405. The imaging element I/F 406 is a circuit that controls driving of the CMOS sensor 405. Examples of the acceleration and orientation sensor 407 include, but are not limited to, an electromagnetic compass or gyrocompass for detecting geomagnetism and an acceleration sensor. The media I/F 409 controls reading and writing (storing) of data from and to a medium (storage medium) 408 such as a flash memory. The GPS receiver 410 receives a GPS signal (positioning signal) from a GPS satellite.

The terminal apparatus 100 further includes a long-range communication circuit 411, an antenna 411a for the long-range communication circuit 411, a CMOS sensor 412, an imaging element I/F 413, a microphone 414, a speaker 415, an audio input/output I/F 416, a display 417, an external device connection I/F 418, a short-range communication circuit 419, an antenna 419a for the short-range communication circuit 419, and a touch panel 420.

The long-range communication circuit 411 is a circuit that communicates with another apparatus via, for example, the communication network 2. The CMOS sensor 412 is an example of a built-in imaging device that captures an image of an object under the control of the CPU 401 to obtain image data. The imaging element I/F 413 is a circuit that controls driving of the CMOS sensor 412. The microphone 414 is a built-in circuit that converts sound into an electrical signal. The speaker 415 is a built-in circuit that generates sound such as music or voice by converting an electrical signal into physical vibration. The audio input/output I/F 416 is a circuit that handles the input and output of audio signals between the microphone 414 and the speaker 415 under the control of the CPU 401.

The display 417 is an example of a display device such as a liquid crystal display (LCD) or an organic electroluminescent (EL) display that displays, for example, an image of an object or various icons. The external device connection I/F 418 is an interface circuit that connects various external devices to the terminal apparatus 100. The short-range communication circuit 419 includes a circuit that performs short-range wireless communication. The touch panel 420 is an example of an input device that allows a user to operate the terminal apparatus 100 by touching a screen of the display 417.

The terminal apparatus 100 further includes a bus line 421. The bus line 421 includes an address bus, a data bus, and the like for electrically connecting the components such as the CPU 401 illustrated in FIG. 6 to one another.

The hardware configuration of the terminal apparatus 100 illustrated in FIG. 6 is an example. The terminal apparatus 100 may have any other hardware configuration including, for example, the configuration of a computer, a communication circuit, a display, a microphone, and a speaker.

### Functional Configuration

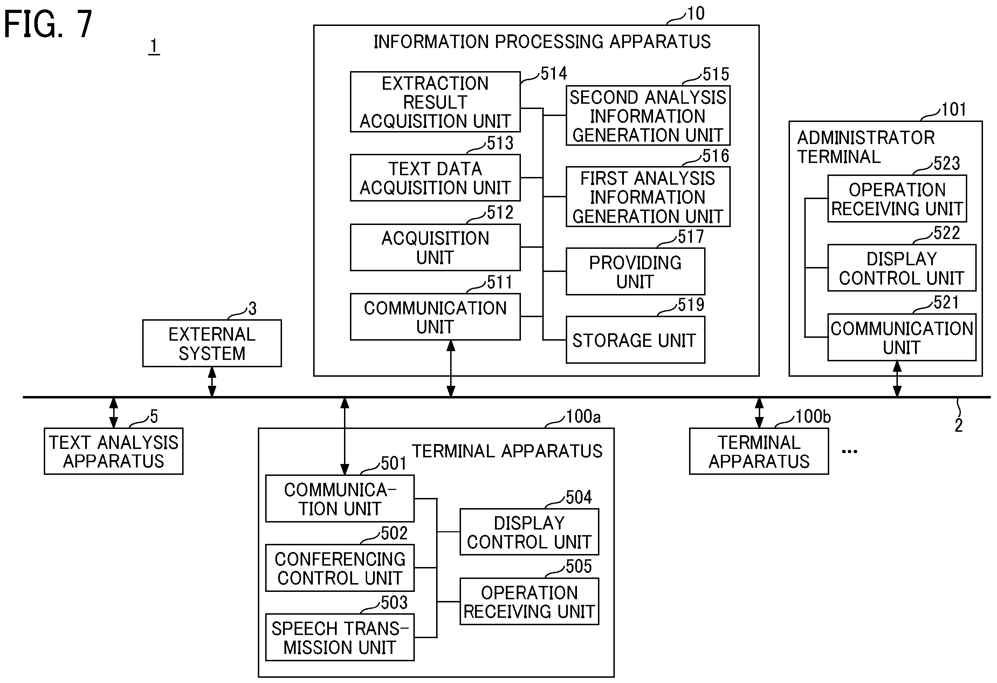

Next, an example functional configuration of the information processing system 1 will be described. FIG. 7 is a diagram illustrating an example functional configuration of the information processing system 1 according to an embodiment of the present disclosure. In the following description, it is assumed that the information processing system 1 has the system configuration as illustrated in FIG. 3.

### Functional Configuration of Terminal Apparatus

For example, the CPU 201 executes a program stored in a storage medium such as the HD 204, the DVD-RW 211, or the medium 213 to implement the functional configuration of the terminal apparatus 100 as illustrated in FIG. 7. The terminal apparatus 100 (in the example illustrated in FIG. 7, the terminal apparatus 100a) includes, for example, a communication unit 501, a conferencing control unit 502, a speech transmission unit 503, a display control unit 504, and an operation receiving unit 505. At least one of the functional components described above may be implemented by hardware. In FIG. 7, the terminal apparatus 100b and the other terminal apparatuses 100 may have any functional configuration that enables the terminal apparatus 100b and the other terminal apparatuses 100 to have an online meeting with the terminal apparatus 100a via, for example, the communication network 2 and the external system 3.

The communication unit 501 executes a communication process for connecting the terminal apparatus 100 to the communication network 2 using, for example, the network I/F 208 to communicate with another apparatus such as the external system 3, the information processing apparatus 10, or another terminal apparatus 100.

The conferencing control unit 502 executes a series of processes related to an online meeting, such as connecting to the online meeting, transmitting and receiving video (or uttered speech) of the online meeting, and inputting and outputting the video (or uttered speech) of the online meeting. The processes executed by the conferencing control unit 502 may be similar to those related to a general online meeting.

The speech transmission unit 503 executes a speech transmission process for acquiring speech uttered by a first participant participating in a business negotiation conducted online and speech uttered by a second participant participating in the same business negotiation, and transmitting the speech to the information processing apparatus 10. For example, the speech transmission unit 503 acquires, from the audio input/output I/F 223 or the like, speech acquired by the microphone 221 (e.g., the speech uttered by the first participant) and speech output from the speaker 222 (e.g., the speech uttered by the second participant), and transmits the acquired speech (audio data) to the information processing apparatus 10. Accordingly, the information processing apparatus 10 can acquire speech uttered by a first participant and a second participant participating in a business negotiation using any online conferencing service.

In another example, the speech transmission unit 503 may acquire speech uttered by the first participant and speech uttered by the second participant from, for example, the conferencing control unit 502 and transmit the acquired speech (audio data) to the information processing apparatus 10. The speech transmission unit 503 is implemented by, for example, the CPU 201 executing an application program (hereinafter referred to as an "application") for the information processing system 1.

The display control unit 504 executes a display control process for controlling, for example, a display unit such as the display 206 to display a display screen. The operation receiving unit 505 executes an operation receiving process for receiving an operation performed by the participant (e.g., the first participant) using, for example, an input device such as the keyboard 209 or the pointing device 210. The conferencing control unit 502, the display control unit 504, and the operation receiving unit 505 are implemented by, for example, a web browser or the like included in the terminal apparatus 100.

### Functional Configuration of Information Processing Apparatus

For example, the CPU 201 or the like executes a program stored in a storage medium such as the HD 204, the DVD-RW 211, or the medium 213 to implement the functional configuration of the information processing apparatus 10 as illustrated in FIG. 7. In the example illustrated in FIG. 7, the information processing apparatus 10 includes a communication unit 511, an acquisition unit 512, a text data acquisition unit 513, an extraction result acquisition unit 514, a second analysis information generation unit 515, a first analysis information generation unit 516, a providing unit 517, and a storage unit 519. At least one of the functional components described above may be implemented by hardware.

The storage unit 519 is implemented by, for example, storage devices such as the HD 204 and the HDD controller 205 illustrated in FIG. 5.

The communication unit 511 executes a communication process for connecting the information processing apparatus 10 to the communication network 2 using, for example, the network I/F 208 to communicate with other apparatuses such as the terminal apparatus 100, the text analysis apparatus 5, and the administrator terminal 101.

The acquisition unit 512 executes an acquisition process for acquiring speech (audio data) uttered by a first participant and a second participant participating in a communication session. In one specific example, when the communication session is a business negotiation, the acquisition unit 512 acquires speech uttered by a first participant and a second participant participating in the business negotiation. For example, the speech uttered by the first participant and the second participant is transmitted from the speech transmission unit 503 of the terminal apparatus 100a used by the first participant, and the acquisition unit 512 acquires the transmitted speech.

The text data acquisition unit 513 acquires text data based on the speech (audio data) uttered by the first participant and the second participant and acquired by the acquisition unit 512. First, the text data acquisition unit 513 executes a conversational speech generation process for combining the speech uttered by the first participant and the speech uttered by the second participant, which are acquired by the acquisition unit 512, to generate conversational speech including the speech uttered by the first participant and the speech uttered by the second participant. Then, the text data acquisition unit 513 performs an existing speech recognition process to convert the uttered speech into text data. The text data may be generated by separately performing speech recognition on the speech uttered by the first participant and the speech uttered by the second participant. In this case, text data for one business negotiation includes text data related to the speech uttered by the first participant and text data related to the speech uttered by the second participant. Thus, the speaker of the text data is identified. The text data acquisition unit 513 may perform speech recognition, or may request an external speech recognition server to perform speech recognition and acquire text data from the external speech recognition server in response to the request.

The extraction result acquisition unit 514 invokes the API, which is made public by the text analysis apparatus 5, to request the text analysis apparatus 5 to analyze the text data, and acquires an extraction result 306 from the text analysis apparatus 5 in response to the request.

The second analysis information generation unit 515 generates a business negotiation report by, for example, formatting the extraction result 306. The first analysis information generation unit 516 generates an analysis report by, for example, aggregating a plurality of extraction results 306. That is, the first analysis information generation unit 516 aggregates the number of detailed information elements 304 related to a group for each preset extraction item from the plurality of extraction results 306 to generate an analysis report. The analysis report is preferably generated from the plurality of extraction results 306. When a single extraction result 306 is used, the number of detailed information elements 304 related to the same group 303 is counted from one business negotiation report corresponding to the single extraction result 306.

The providing unit 517 executes a provision process for providing a display screen to display a business negotiation report or an analysis report. For example, in response to a request from the terminal apparatus 100 or the administrator terminal 101, the providing unit 517 causes the administrator terminal 101 or the like to display a display screen that displays at least one of the business negotiation report and the analysis report. The providing unit 517 may transmit at least one of the business negotiation report and the analysis report to the administrator terminal 101 by e-mail or the like, or using a social networking service (SNS) or the like. The business negotiation report or the analysis report may be generated in response to a request from the terminal apparatus 100 or the administrator terminal 101, or may be automatically generated at a predetermined time. The providing unit 517 may print at least one of the business negotiation report and the analysis report from a printing apparatus.

The storage unit 519 stores, for example, various types of information, data, and programs, such as uttered speech acquired by the acquisition unit 512, one or more text data items acquired by the text data acquisition unit 513, a business negotiation report generated by the second analysis information generation unit 515, and an analysis report generated by the first analysis information generation unit 516.

### Functional Configuration of Administrator Terminal

For example, the CPU 201 executes a program stored in a storage medium such as the HD 204, the DVD-RW 211, or the medium 213 to implement the functional configuration of the administrator terminal 101 as illustrated in FIG. 7. In the example illustrated in FIG. 7, the administrator terminal 101 includes functional components of the administrator terminal 101, such as a communication unit 521, a display control unit 522, and an operation receiving unit 523. At least one of the functional components described above may be implemented by hardware.

The communication unit 521 executes a communication process for connecting the administrator terminal 101 to the communication network 2 using, for example, the network I/F 208 to communicate with another apparatus such as the information processing apparatus 10.

The display control unit 522 executes a display control process for controlling, for example, a display unit such as the display 206 to display a display screen provided from, for example, the information processing apparatus 10. The operation receiving unit 523 executes an operation receiving process for receiving an operation performed by, for example, the administrator on, for example, the display screen displayed by the display control unit 522. The display control unit 522 and the operation receiving unit 523 may be implemented by, for example, a web browser or the like included in the administrator terminal 101. For example, the administrator terminal 101 may be a general-purpose information terminal or the like including a web browser.

The functional configuration of the information processing system 1 illustrated in FIG. 7 is an example. For example, the information processing apparatus 10 may have the functions of the external system 3. At least one of the functional components of the information processing apparatus 10 may be included in the terminal apparatus 100, the administrator terminal 101, or the like. At least one of the functional components of the terminal apparatus 100 may be included in the information processing apparatus 10, the external system 3, or the like. In short, each functional component of the information processing system 1 illustrated in FIG. 7 may be implemented by any one of the apparatuses included in the information processing system 1.

### Extraction Items and Groups

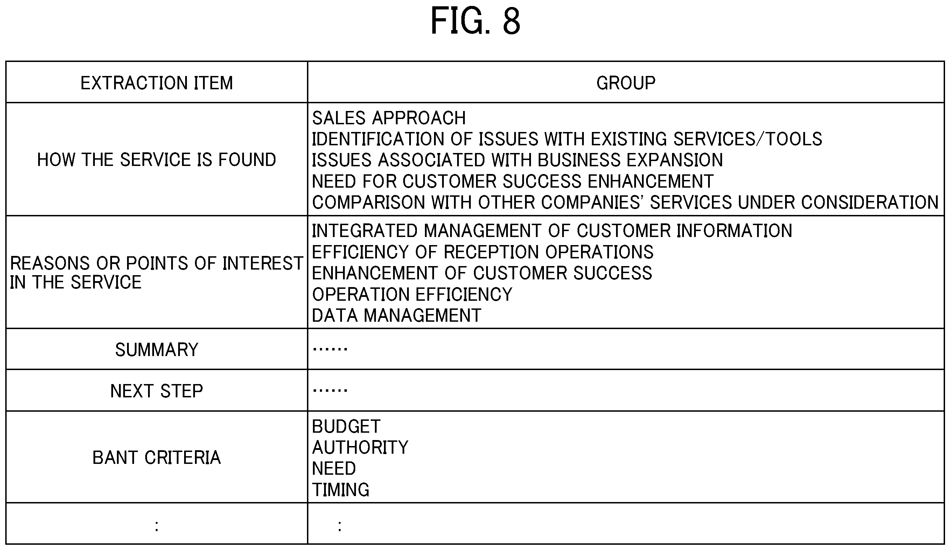

FIG. 8 is a diagram illustrating an example of extraction items and groups managed by the extraction result acquisition unit 514. Extraction items and groups are set for each customer. The term "customer" refers to a contracting company or the like that uses the information processing system 1. As described below, the administrator of customers can set extraction items and groups for each customer. For example, the extraction item "How the service is found" is associated with groups "Sales approach", "Identification of issues with existing services/tools", "Issues associated with business expansion", "Need for customer success enhancement", and "Comparison with other companies' services under consideration". The extraction items or groups as illustrated in FIG. 8 are an example and may be different for each customer. Alternatively, frequently used extraction items and groups may be included in the default settings.

Not all of the extraction items are associated with groups. For a customer for whom it is determined unnecessary to set groups, extraction items may be set, but groups are not set.

### Process Flow

Next, the process flow of an information processing method according to the present embodiment will be described.

### Overall Process of Information Processing System 1

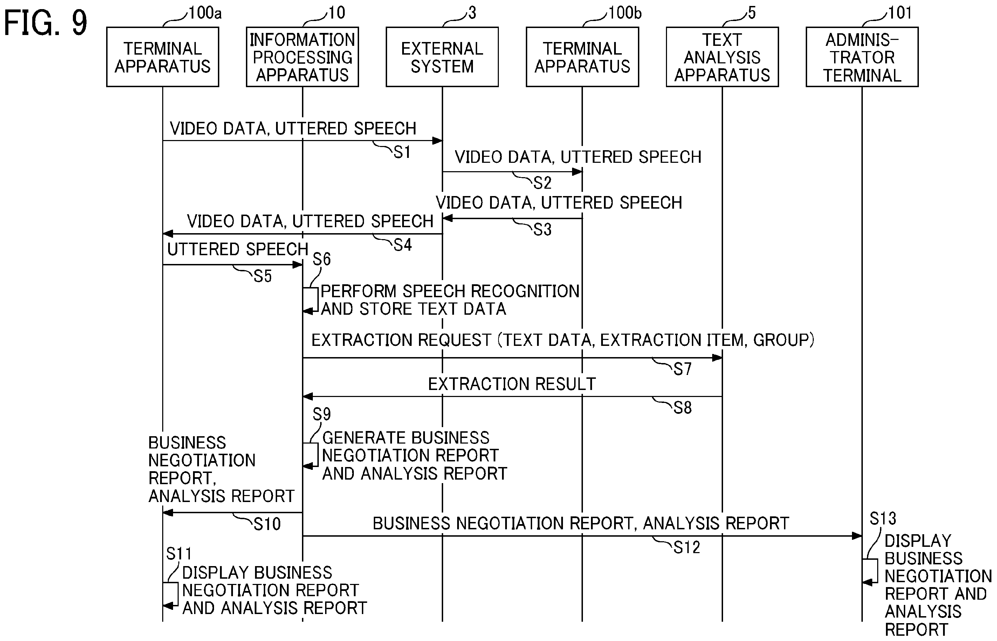

FIG. 9 is a sequence diagram illustrating the flow of operations performed by the information processing system 1 to generate a business negotiation report and an analysis report from uttered speech.

A first participant participating in a business negotiation conducted online uses the terminal apparatus 100 (e.g., the terminal apparatus 100a), and a second participant participating in the same business negotiation uses the terminal apparatus 100 (e.g., the terminal apparatus 100b). The terminal apparatuses 100a and 100b support conversations at least by voice. The conferencing control unit 502 of the terminal apparatus 100a connects to a uniform resource locator (URL) acquired from the external system 3. The conferencing control unit 502 of the terminal apparatus 100b also connects to the same URL. The terminal apparatuses 100a and 100b can have an online meeting. In step S1, the communication unit 501 of the terminal apparatus 100a transmits video data and uttered speech to the external system 3 (the URL described above). In step S2, the external system 3 transmits the video data and the uttered speech to the terminal apparatus 100b. The transmission and reception of the video data may be omitted.

In step S3, the communication unit 501 of the terminal apparatus 100b transmits video data and uttered speech to the external system 3 (the URL described above). In step S4, the external system 3 transmits the video data and the uttered speech to the terminal apparatus 100a. The terminal apparatuses 100a and 100b repeat steps S1 to S4.

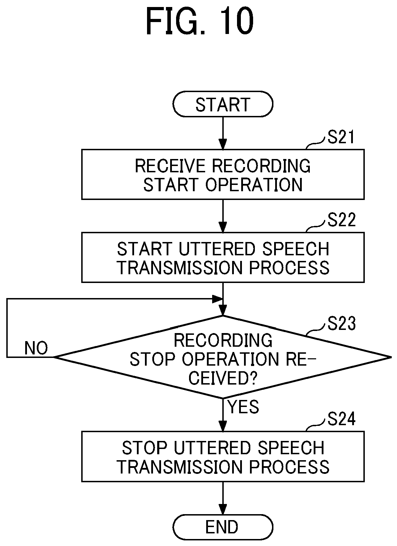

In step S5, the speech transmission unit 503 of the terminal apparatus 100a transmits speech uttered by the first participant and speech uttered by the second participant to the information processing apparatus 10. The processing of step S5 will be described in detail with reference to FIG. 10.

In step S6, the communication unit 511 of the information processing apparatus 10 receives the speech uttered by the first participant and the speech uttered by the second participant. The text data acquisition unit 513 performs speech recognition on the speech uttered by the first participant and the speech uttered by the second participant and acquires text data. The text data acquisition unit 513 stores the text data in the storage unit 519. The text data is increasingly accumulated as the online meeting (i.e., the business negotiation) proceeds. The storage unit 519 stores one text data item for each online meeting. When another online meeting is held, one text data item is stored in association with the online meeting.

In step S7, the extraction result acquisition unit 514 of the information processing apparatus 10 transmits an extraction request for extracting an extraction result 306 to the text analysis apparatus 5. The extraction request includes text data accumulated for each online meeting, extraction items managed for each customer, and groups. The extraction result acquisition unit 514 issues an analysis request at any of the following timings (1) to (4).

### (1) Each time one online meeting ends

The timing (1) is suitable for a case in which the information processing apparatus 10 generates a business negotiation report at an earlier stage. The business negotiation report may be used by the participant (e.g., the first participant) for, for example, a daily report. An analysis report is generated at a time when a plurality of business negotiation reports are accumulated, such as at regular intervals.

### (2) Periodically (e.g., every day, every three days, every week, or every two weeks)

In this case, the information processing apparatus 10 can generate an analysis report from business negotiations conducted within a certain period of time. The analysis report may be used by the participant (e.g., the first participant) for, for example, a weekly report or a monthly report. The information processing apparatus 10 can generate a business negotiation report and an analysis report at the same time.

### (3) Each time a certain number of business negotiations end (e.g., an appropriate number of business negotiations set in advance from three to ten)

In this case, the information processing apparatus 10 can generate an analysis report from a constantly specified number of business negotiations. Since analysis reports are generated using a constant number of text data items, the quality of the analysis reports is likely to be kept stable. The information processing apparatus 10 can generate a business negotiation report and an analysis report at the same time.

### (4) In response to a request from the terminal apparatus 100 or the administrator terminal 101

In this case, for example, the participant (e.g., the first participant) or the administrator can acquire a business negotiation report and an analysis report at the desired time. In addition, the participant (e.g., the first participant) or the administrator can generate a business negotiation report and an analysis report by designating a plurality of online meetings as desired.

In step S8, the extraction result acquisition unit 514 of the information processing apparatus 10 receives an extraction result 306 in response to the extraction request. The extraction result 306 is generated for each online meeting.

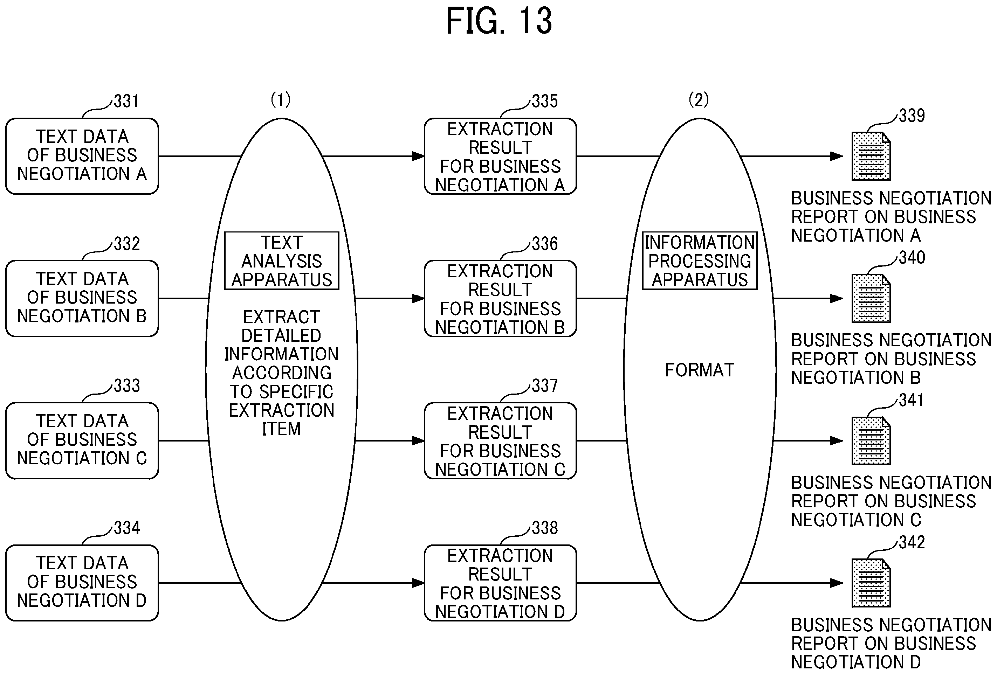

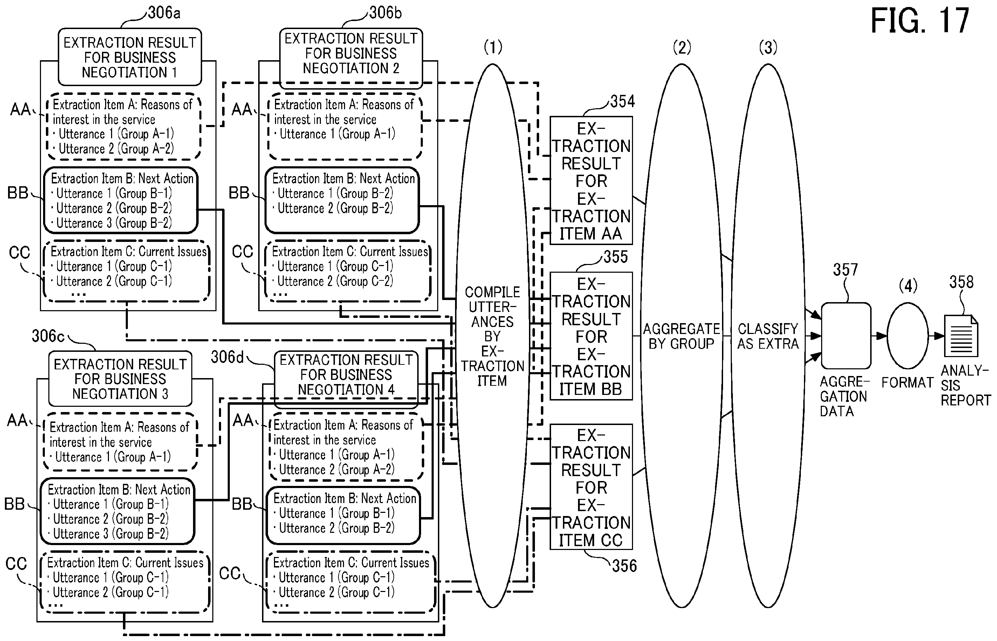

In step S9, the second analysis information generation unit 515 of the information processing apparatus 10 formats the extraction result 306 for each online meeting to generate a business negotiation report for the online meeting. Further, the first analysis information generation unit 516 of the information processing apparatus 10 aggregates, from all the extraction results 306 generated for the respective corresponding online meetings, the number of detailed information elements 304 related to the group 303 for each of the extraction items 302, to generate an analysis report related to the extraction item 302 and the group 303. The processing of step S9 will be described in detail with reference to FIGs. 13 and 17, for example.

In step S10, the providing unit 517 of the information processing apparatus 10 transmits the business negotiation report and the analysis report to the terminal apparatus 100a through the communication unit 511. The providing unit 517 may provide one of the business negotiation report and the analysis report to the terminal apparatus 100a.

In step S11, the communication unit 501 of the terminal apparatus 100a receives the business negotiation report and the analysis report, and the display control unit 522 causes the display 417 to display the business negotiation report and the analysis report. The business negotiation report is a summary of each individual online meeting and is useful to the participant (e.g., the first participant) who has conducted the business negotiation. The analysis report compiles a plurality of business negotiations and aggregates statements to determine which group 303 and which extraction item 302 are discussed frequently. Thus, the analysis report is useful for overall analysis of the business negotiations.

In step S12, the providing unit 517 of the information processing apparatus 10 transmits the business negotiation report and the analysis report to the administrator terminal 101 through the communication unit 511. The providing unit 517 may provide one of the business negotiation report and the analysis report to the administrator terminal 101.

In step S13, the communication unit 521 of the administrator terminal 101 receives the business negotiation report and the analysis report, and the display control unit 522 causes the display 206 to display the business negotiation report and the analysis report. The business negotiation report is a summary of each individual online meeting and is useful to a person who manages the participants (e.g., the first participant and the second participant) who have conducted the business negotiation. The analysis report compiles a plurality of business negotiations and aggregates statements to determine which group 303 and which extraction item 302 are discussed frequently. Thus, the analysis report is useful for overall analysis of the business negotiations.

### Process Performed by Terminal Apparatus

FIG. 10 is a flowchart illustrating an example of a process performed by the terminal apparatus 100a in step S5 in FIG. 9.

In step S21, in response to the operation receiving unit 505 receiving an operation to start recording of uttered speech, the terminal apparatus 100a executes the processing of step S22 and subsequent steps.

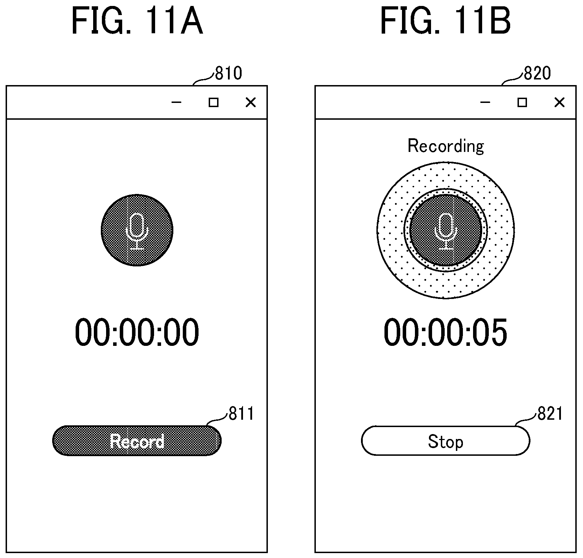

FIGs. 11A and 11B are diagrams illustrating an example of operation screens of the terminal apparatus 100a according to an embodiment of the present disclosure. The terminal apparatus 100a executes an application corresponding to the information processing system 1 to display, for example, an operation screen as illustrated in FIG. 11A or 11B. The participant (e.g., the first participant) can perform an operation to start the recording of uttered speech by, for example, selecting a "Record" button 811 on an operation screen 810 as illustrated in FIG. 11A.

In step S22, the speech transmission unit 503 starts an uttered speech transmission process to acquire speech uttered by a participant (e.g., the first participant) participating in a business negotiation and speech uttered by another participant (e.g., the second participant) participating in the same business negotiation and transmit the acquired speech to the information processing apparatus 10.

In step S23, the operation receiving unit 505 determines whether a recording stop operation has been received. In response to the participant (e.g., the first participant) selecting the "Record" button 811 on the operation screen 810 as illustrated in FIG. 11A, the terminal apparatus 100a displays, for example, an operation screen 820 as illustrated in FIG. 11B. The participant (e.g., the first participant) can perform the recording stop operation by, for example, selecting a "Stop" button 821 on the operation screen 820 as illustrated in FIG. 11B.

If a recording stop operation has been received, the operation receiving unit 505 causes the process to proceed to step S24. On the other hand, if a recording stop operation has not been received, for example, the operation receiving unit 505 repeatedly executes the processing of step S23.

In step S24, the speech transmission unit 503 stops or ends the uttered speech transmission process. Through the process illustrated in FIG. 10, the terminal apparatus 100a can transmit speech uttered by the participant (e.g., the first participant) and the other participant (e.g., the second participant) to the information processing apparatus 10.

### Setting of Extraction Items and Groups

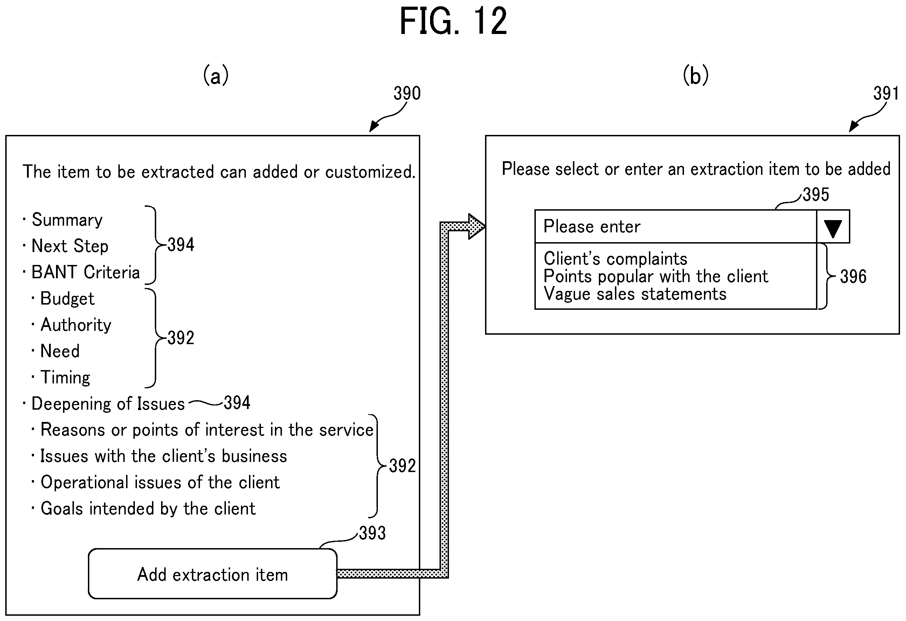

Next, a method for setting extraction items and groups will be described with reference to FIG. 12. FIG. 12 is a transition diagram of screens for setting extraction items to be displayed on the administrator terminal 101. FIG. 12(a) illustrates an extraction item list screen 390. The extraction item list screen 390 displays extraction items 394 that are currently set. For each of the extraction items 394, groups 392 associated with the extraction item 394 are displayed. The set extraction items 394 may be initially set in advance or may be set by the administrator in the past. The administrator may be allowed to select an extraction item to be used or not to be used and a group to be used or not to be used from among the set extraction items 394 and the groups 392.

The administrator presses an addition button 393 to add another extraction item. Accordingly, an extraction item addition screen 391 illustrated in FIG. 12(b) is displayed. FIG. 12(b) illustrates the extraction item addition screen 391. The extraction item addition screen 391 displays an input field 395 and a pull-down menu 396. The administrator can select an extraction item to be added from the pull-down menu 396. Additionally, the administrator can input a desired extraction item to the input field 395. Since the LLM can understand natural language, the administrator can input an extraction item in natural language.

The list of extraction items displayed in the pull-down menu 396 may be, for example, extraction items set in the information processing apparatus 10 by other customers. This allows the administrator to select an extraction item with reference to extraction items used by other customers. The administrator can also add a group for each extraction item on a screen similar to that illustrated in FIG. 12(b).

In one example, the information processing apparatus 10 transmits the extraction items to the text analysis apparatus 5 and acquires a recommendation for extraction items to be compiled together because of similarity, if any. The same applies to groups. The reason is that the administrator sets a large number of extraction items or groups, which may result in similar extraction items or groups. In this case, the information processing apparatus 10 acquires, from the text analysis apparatus 5, an extraction item or a group obtained by aggregating similar extraction items or groups and presents the acquired extraction item or group to the administrator.

The information processing apparatus 10 may transmit the entire text data from which an analysis report is to be generated to the text analysis apparatus 5, acquire recommended extraction items or groups to be set, and present the recommended extraction items or groups to the administrator. The administrator can set an extraction item or a group from among the recommended extraction items or groups.

### Generation of Business Negotiation Report

Next, a method for generating a business negotiation report will be described with reference to, for example, FIG. 13. An expected user of the business negotiation report is at least one of a salesperson (corresponding to the first participant described above) who has conducted the business negotiation and the administrator. The following use cases are considered. After the business negotiation is completed, the salesperson (i.e., the first participant) checks the business negotiation report and makes a copy of any information to a note. The extraction result 306 from which the business negotiation report is generated is used to generate an "analysis report". To this end, the extraction result 306 also includes detailed information elements 304 related to a group for the "analysis report".

FIG. 13 is a diagram schematically illustrating the operation flow for generation of a business negotiation report.
(1) The text analysis apparatus 5 acquires detailed information elements 304 related to an extraction item 302 and a group 303 set by the administrator from each of text data items 331 to 334. As illustrated in FIG. 13, the text data items 331 to 334 are stored in the storage unit 519 for business negotiations A to D, respectively, and the text analysis apparatus 5 generates a plurality of extraction results 335 to 338 for the business negotiations A to D, respectively. Thus, the extraction results 335 to 338 for the business negotiations A to D are obtained, respectively. Each of the extraction results 335 to 338 includes, as illustrated in FIG. 1, the group 303 associated with the extraction item 302 and the detailed information elements 304 associated with the group 303.
(2) The second analysis information generation unit 515 of the information processing apparatus 10 formats the extraction results 335 to 338 to generate business negotiation reports 339 to 342, respectively. The extraction results 335 to 338 generated by the text analysis apparatus 5 are in a file format. The extraction results 335 to 338 include information that is not extracted from the text data items 331 to 334, such as a message "The following content has been extracted". The second analysis information generation unit 515 deletes such information that is not extracted from the text data items 331 to 334. This process is referred to as formatting in the present embodiment.

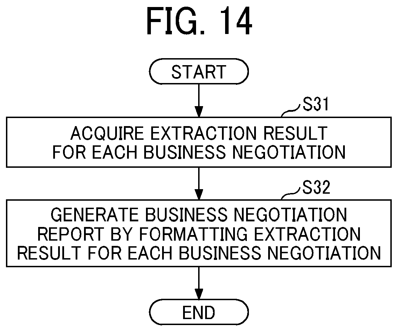

FIG. 14 is a flowchart illustrating a process performed by the second analysis information generation unit 515 to generate a business negotiation report.

In step S31, the second analysis information generation unit 515 acquires the extraction results 335 to 338 for the business negotiations A to D. The extraction results 335 to 338 for the business negotiations A to D may be acquired from the text analysis apparatus 5 in real time or may be stored in the storage unit 519.

In step S32, the second analysis information generation unit 515 formats the extraction results 335 to 338 for the business negotiations A to D to generate the business negotiation reports 339 to 342 on the business negotiations A to D, respectively.

### Example of Business Negotiation Report

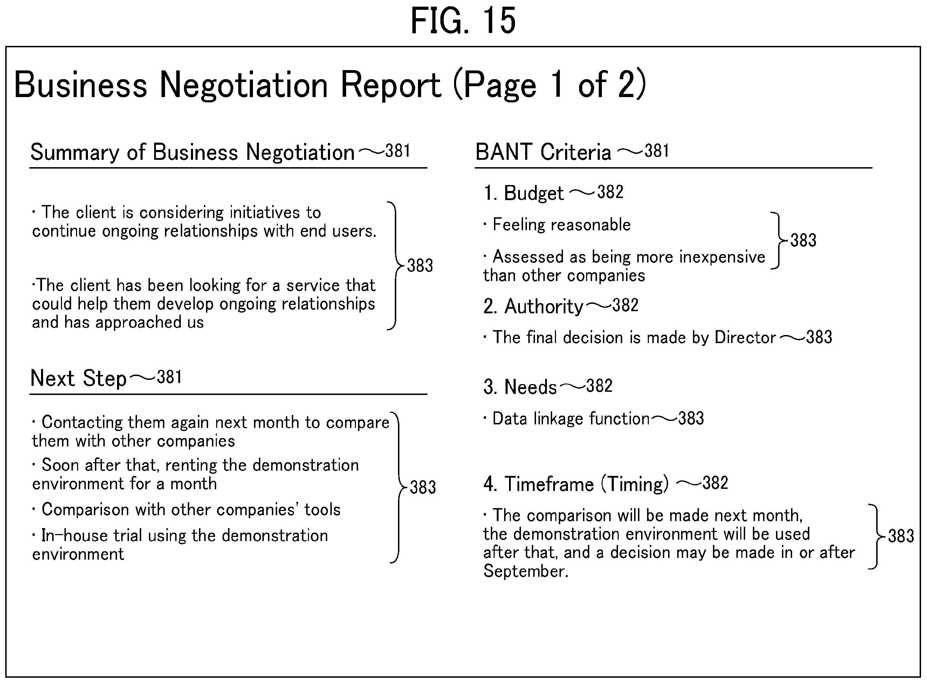

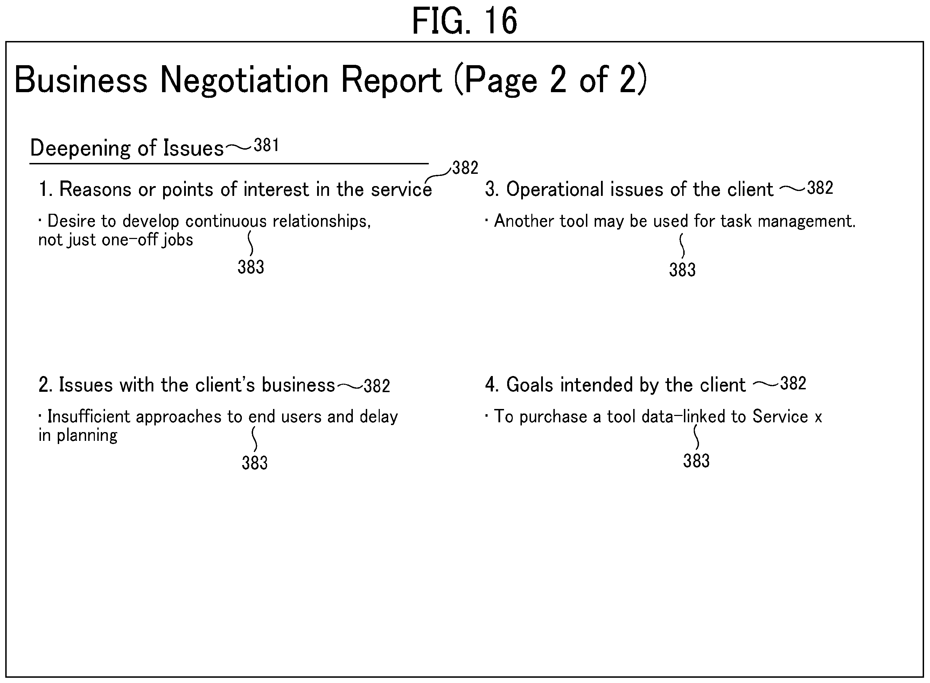

FIGs. 15 and 16 are diagrams illustrating an example of a business negotiation report. The business negotiation report is generated from text data of one business negotiation. The business negotiation report illustrated in FIGs. 15 and 16 includes detailed information elements 383 determined to be related to extraction items 381 or groups 382 in the extraction items 381 from text data of one business negotiation. As described above, the information processing apparatus 10 can generate a business negotiation report in which the detailed information elements 383 stating the extraction items 381 or the groups 382 are arranged such that each of the extraction items 381 or each of the groups 382 is followed by one or more corresponding detailed information elements 383.

### Generation of Analysis Report

A method for generating an analysis report will be described with reference to, for example, FIG. 17. The participant (e.g., the first participant) or the administrator referring to the aggregated analysis report can obtain insights on, for example, marketing.

FIG. 17 is a diagram schematically illustrating the operation flow for generation of an analysis report. In FIG. 17, extraction results 306a to 306d for four business negotiations, namely, business negotiations 1 to 4, are obtained. Each of the extraction results 306a to 306d includes one or more groups 303 for each extraction item 302, and each of the one or more groups 303 is associated with detailed information elements 304. There may be a group associated with no detailed information elements 304. FIG. 17 illustrates specific extraction items AA, BB, and CC. The extraction items AA in the extraction results 306a to 306d are the same, the extraction items BB in the extraction results 306a to 306d are the same, and the extraction items CC in the extraction results 306a to 306d are the same. Each of the extraction items AA to CC is associated with one or more groups. The detailed information elements 304 are omitted in FIG. 17.
(1) The first analysis information generation unit 516 compiles the extraction item AA of the business negotiation 1, the extraction item AA of the business negotiation 2, the extraction item AA of the business negotiation 3, and the extraction item AA of the business negotiation 4. The first analysis information generation unit 516 compiles the extraction item BB of the business negotiation 1, the extraction item BB of the business negotiation 2, the extraction item BB of the business negotiation 3, and the extraction item BB of the business negotiation 4. The first analysis information generation unit 516 compiles the extraction item CC of the business negotiation 1, the extraction item CC of the business negotiation 2, the extraction item CC of the business negotiation 3, and the extraction item CC of the business negotiation 4. The term "compiling" refers to a process of collecting (or organizing) detailed information elements 304 determined to be related to the extraction items AA to CC, by extraction item. The groups associated with the extraction items AA to CC are also compiled along with the respective extraction items AA to CC. The first analysis information generation unit 516 compiles detailed information elements 304 related to the extraction item AA and one or more groups associated with the extraction item AA to generate an extraction result 354, compiles detailed information elements 304 related to the extraction item BB and one or more groups associated with the extraction item BB to generate an extraction result 355, and compiles detailed information elements 304 related to the extraction item CC and one or more groups associated with the extraction item CC to generate an extraction result 356.
(2) Then, the first analysis information generation unit 516 aggregates the number of detailed information elements 304 related to the extraction item 302 and the group 303 in each of the extraction results 354 to 356. For example, the extraction item 302 is "How the service is found", and the extraction item 302 is associated with the groups "Sales approach" and "Identification of issues with existing services/tools" as the groups 303. The first analysis information generation unit 516 aggregates the number of detailed information elements 304 determined to be related to the group "Sales approach" and aggregates the number of detailed information elements 304 determined to be related to the group "Identification of issues with existing services/tools". The term "aggregation" mainly refers to summation. The detailed information elements 304 determined to be related to group X are (portions of) text data determined to be an utterance related to (or classified as) the group X. For example, the number of detailed information elements 304 determined to be related to the group "Sales approach" in the business negotiation 1 is 1, the number of detailed information elements 304 determined to be related to the group "Sales approach" in the business negotiation 2 is 2, the number of detailed information elements 304 determined to be related to the group "Sales approach" in the business negotiation 3 is 3, and the number of detailed information elements 304 determined to be related to the group "Sales approach" in the business negotiation 4 is 4. In this case, the aggregate result is "10". The first analysis information generation unit 516 performs the aggregation process described above for each group in each extraction item.
   In one example, the first analysis information generation unit 516 may sum the detailed information elements 304 by extraction item instead of or in addition to by group. In another example, the first analysis information generation unit 516 may calculate an average for each group or for each extraction item. In another example, the first analysis information generation unit 516 may determine top N groups or extraction items with which a large number of detailed information elements 304 are associated. In another example, the first analysis information generation unit 516 may convert the aggregate result into a score or a point within a range of 0 to 100, for example. This configuration facilitates comparison between different analysis reports even when the number of characters in the text data varies from business negotiation to business negotiation.
(3) Then, the first analysis information generation unit 516 classifies predetermined utterances in the extraction results 354 to 356 into a group assigned a label such as "unclassified" (or "other"). In FIG. 17, this classification is referred to as "classification as extra". Detailed information elements 304 classified as "extra" are detailed information elements 304 associated with information on a single meeting, such as those related to the "business negotiation type", the "salesperson (individual sales representative) name", the "client name", and the "client company name". For example, the utterance, "Download the white paper from Mr. X, who is selling on a blog", is given during any one of the business negotiations 1 to 4. It is assumed that the text analysis apparatus 5 determines that such an utterance is not related to any group. In this case, the utterance is not included in the extraction result 306. That is, the utterance is omitted from the extraction result 306. To address this situation, the information processing apparatus 10 defines an unclassified group in advance before transmitting an analysis request to the text analysis apparatus 5, and transmits a request to classify detailed information elements 304 (an example of second utterance information) related to the "business negotiation type", the "salesperson (individual sales representative) name", the "client name", and the "client company name" as the unclassified group. As a result, an utterance, such as "Download the white paper from Mr. X, who is selling on a blog", can also be extracted.

Even a detailed information element 304 belonging to the unclassified group is determined to be related to the extraction item 302.

As described above, the first analysis information generation unit 516 classifies predetermined detailed information elements 304 as the unclassified group. This classification may involve listing. The first analysis information generation unit 516 may further aggregate the number of detailed information elements 304 estimated to be the same utterance among the detailed information elements 304 belonging to the unclassified group. The detailed information elements 304 estimated to be the same utterance may be determined by using an existing method, such as a method for performing morphological analysis of each utterance and converting words into vector representations. The first analysis information generation unit 516 determines the detailed information elements 304 estimated to be the same utterance, based on the degree of similarity between the vectors. For example, when the number of detailed information elements 304 belonging to the unclassified group is large, the administrator can take measures, such as adding a new group.

Through the process described above, the first analysis information generation unit 516 generates aggregation data 357. The aggregation data 357 indicates the number of detailed information elements 304 associated with the extraction item 302 and the group 303. It is understood that the aggregation data 357 may include the detailed information elements 304 themselves.
(4) The first analysis information generation unit 516 formats the aggregation data 357 and generates an analysis report 358. The aggregation data 357 may be formatted in the same way as that for a business negotiation report. In another example, the first analysis information generation unit 516 may add a heading for an analysis report.

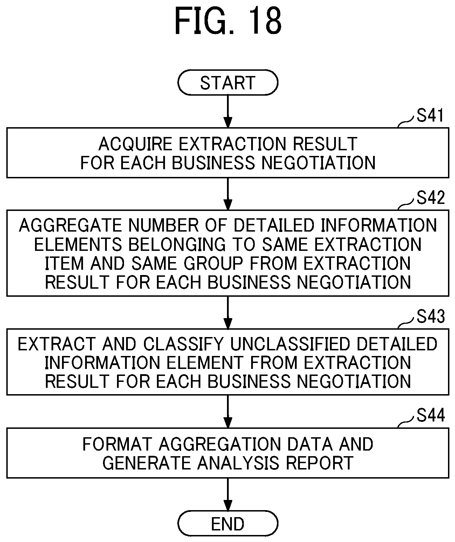

FIG. 18 is a flowchart illustrating a process performed by the first analysis information generation unit 516 to generate an analysis report.

In step S41, the first analysis information generation unit 516 acquires the extraction results 306a to 306d for the business negotiations 1 to 4. The extraction results 306a to 306d for the business negotiations 1 to 4 may be acquired from the text analysis apparatus 5 in real time or may be stored in the storage unit 519.

In step S42, the first analysis information generation unit 516 aggregates the number of detailed information elements 304 related to the same extraction item and the same group from the extraction results 306a to 306d for the business negotiations 1 to 4. The first analysis information generation unit 516 aggregates the detailed information elements 304 for all the extraction items and groups included in the extraction result 306.

In step S43, the first analysis information generation unit 516 classifies detailed information elements 304 as the unclassified group from the extraction results 306a to 306d for the business negotiations 1 to 4. The first analysis information generation unit 516 compiles the aggregate results in steps S42 and S43 and generates the aggregation data 357.

The first analysis information generation unit 516 formats the aggregation data 357 and generates the analysis report 358 (step S44).

### Example of Analysis Report

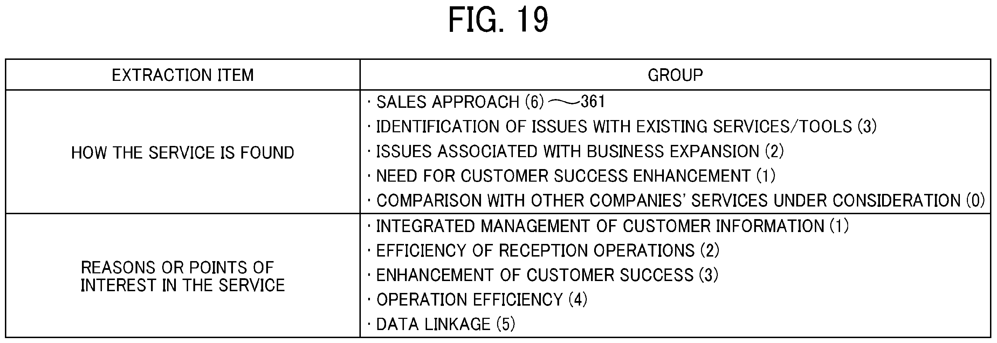

FIG. 19 is a diagram illustrating an example of an analysis report displayed on the terminal apparatus 100 or the administrator terminal 101. In the analysis report illustrated in FIG. 19, an extraction item and a group are associated with each other. For example, the extraction item "How the service is found" is associated with the following groups: "Sales approach", "Identification of issues with existing services/tools", "Issues associated with business expansion", "Need for customer success enhancement", and "Comparison with other companies' services under consideration". Each group is presented with an aggregate result 361 in parentheses. The aggregate result 361 indicates that, for example, the number of detailed information elements 304 determined to be related to the group "Sales approach" is 6. This indicates that the number of detailed information elements 304 determined to be related to the group "Sales approach" in each of the extraction results extracted from text data items of a plurality of business negotiations are aggregated to yield 6.

Also for the extraction item "Reasons or points of interest in the service", groups and aggregate results 361 of detailed information elements 304 are displayed in a similar manner.

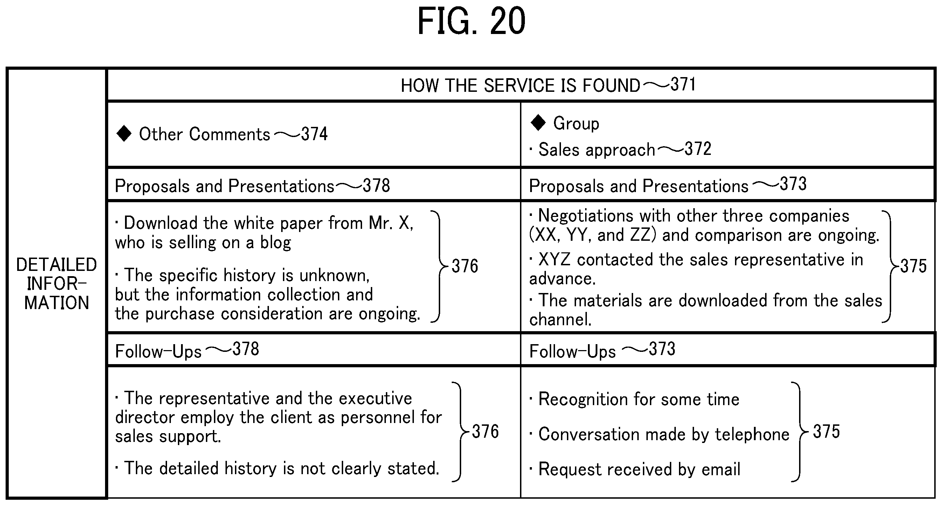

For example, the participant (e.g., the first participant) or the administrator clicks on a desired group to check detailed information elements 304 determined to be related to the desired group. Accordingly, analysis report details illustrated in FIG. 20 are displayed.

FIG. 20 is a diagram illustrating an example of analysis report details displayed on the terminal apparatus 100 or the administrator terminal 101. First, the right column will be described. The analysis report details include an extraction item 371 and a group name 372. The group name 372 is the name of a group clicked on by the participant (e.g., the first participant) or the administrator in the analysis report illustrated in FIG. 19. The analysis report details further include headings 373. Each of the headings 373 is one of the detailed information elements 304 associated with information on a single meeting and acquired by the first analysis information generation unit 516 from the text analysis apparatus 5. Below each of the headings 373, detailed information elements 375 determined to be related to the group name 372 are displayed. The participant (e.g., the first participant) or the administrator can check the detailed information elements 375 on a group-by-group basis.

Then, the left column will be described. Other comments 374 indicate detailed information elements determined as the unclassified group. Below each of headings 378, detailed information elements 376 determined as the unclassified group are displayed. The headings 378 indicate groups determined as the "business negotiation type", which is unclassified (or is classified as extra). The participant (e.g., the first participant) or the administrator can also check the detailed information elements 376 belonging to the unclassified group without omission.

The display method illustrated in FIGs. 19 and 20 is an example, and the analysis report illustrated in FIG. 19 and the analysis report details illustrated in FIG. 20 may be displayed on a single screen.

The information processing apparatus 10 according to the present embodiment can format an extraction result 306 that summarizes the content of each business negotiation, and generate a business negotiation report. Furthermore, the information processing apparatus 10 can aggregate extraction results 306 extracted from a plurality of business negotiations according to each group 303, and generate an analysis report. A customer can change the extraction item 302 and the group 303 to generate analysis reports based on various extraction items 302 and groups 303. Thus, even for the same customer, any extraction item 302 and group 303 can be designated to perform an analysis using various extraction items 302 and groups 303, and an analysis result of a unique extraction item can be obtained. In addition, since detailed information elements 304 can be classified as an unclassified group and included in the analysis report, minority opinions or less frequent utterances can also be displayed without omission.

While an embodiment of the present disclosure has been described, the present disclosure is not limited to such a specific embodiment and may be modified or applied in various ways without departing from the spirit of the present disclosure as defined in the appended claims.

For example, the information processing apparatus 10 may designate a salesperson (individual sales representative) and request the text analysis apparatus 5 to extract an extraction item. Text data obtained from the text analysis apparatus 5 includes identification information of the designated salesperson. Thus, the information processing apparatus 10 can generate a business negotiation report and an analysis report for each salesperson.

In the example configuration illustrated in FIG. 7 and so forth, main functions are separately illustrated so as to facilitate understanding of the processing performed by the information processing apparatus 10. No limitation on the present disclosure is intended by how the functions are divided by process or by the name of the functions. The processing of the information processing apparatus 10 may be divided into more processing units according to the details of processing. Further, the division may be made such that each unit of processing includes more processing operations.

Each of the functions of the embodiment described above can be implemented by one or more processing circuits or circuitry. As used herein, the term "processing circuit or circuitry" includes processors programmed to implement each function by software, such as a processor implemented by an electronic circuit, and devices designed to implement the functions described above, such as an application specific integrated circuit (ASIC), a digital signal processor (DSP), a field programmable gate array (FPGA), and existing circuit modules.

The apparatuses described in the embodiment are just one example of plural computing environments that implement the embodiment disclosed herein. In one embodiment, for example, the external system 3 and the information processing apparatus 10 include multiple computing devices such as a server cluster. The multiple computing devices are configured to communicate with one another through any type of communication link including, for example, a network and a shared memory, and perform the processes disclosed herein.

Furthermore, the information processing apparatus 10, the terminal apparatus 100, and the administrator terminal 101 can be configured to share the disclosed processing steps, for example, the processes illustrated in FIGs. 14 and 18, in various combinations. For example, a process executed by the information processing apparatus 10 may be executed by the terminal apparatus 100 or the administrator terminal 101. Further, a process executed by the terminal apparatus 100 and a process executed by the administrator terminal 101 may be executed by the information processing apparatus 10. The components of the information processing apparatus 10 may be integrated into one apparatus or divided into a plurality of apparatuses.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (1) comprising:
an acquisition unit (512) configured to acquire speech uttered by a first participant and a second participant, the first participant and the second participant participating in a communication session;
a text data acquisition unit (513) configured to acquire text data from the speech through speech recognition;
an operation receiving unit (523) configured to receive a setting of an extraction item to be extracted from the text data; and
an extraction result acquisition unit (514) configured to acquire an extraction result obtained by extracting first utterance information related to the extraction item from the text data.

2. The information processing system (1) according to claim 1, wherein
the operation receiving unit (523) is configured to receive, for the extraction item, a setting of a group according to which content of the extraction item is classified, and
the extraction result acquisition unit (514) is configured to acquire the extraction result, the extraction result being obtained by extracting the first utterance information related to the extraction item and the group from the text data.

3. The information processing system (1) according to claim 2, further comprising a storage unit (519) configured to store a plurality of text data items, each generated from a respective one of a plurality of communication sessions, wherein
the extraction result acquisition unit (514) is configured to acquire a plurality of extraction results, each extracted from a respective one of the plurality of text data items.

4. The information processing system (1) according to claim 3, further comprising a first analysis information generation unit (516), wherein
the first utterance information includes one or more first utterance information elements, and
the first analysis information generation unit (516) is configured to:
aggregate a number of first utterance information elements determined to be related to the extraction item and the group in each of the plurality of extraction results, the extraction item and the group each being identical across the plurality of extraction results; and
associate the number of first utterance information elements with the extraction item and the group to generate first analysis information.

5. The information processing system (1) according to claim 4, further comprising a providing unit (517) configured to provide the first analysis information generated by the first analysis information generation unit (516).

6. The information processing system (1) according to claim 5, wherein
the providing unit (517) is configured to display one or more first utterance information elements determined to be related to the extraction item and the group, the extraction item and the group each being identical across the plurality of extraction results.

7. The information processing system (1) according to claim 5, wherein
the extraction result acquisition unit (514) is configured to acquire the extraction result, the extraction result being obtained by extracting second utterance information belonging to an unclassified group from the plurality of text data items, the second utterance information including one or more second utterance information elements, and
the providing unit (517) is configured to display the one or more second utterance information elements.

8. The information processing system (1) according to claim 3, further comprising a second analysis information generation unit (515) configured to format each of the plurality of extraction results to generate second analysis information corresponding to a respective one of the plurality of extraction results.

9. The information processing system (1) according to claim 8, further comprising a providing unit (517) configured to provide the second analysis information generated by the second analysis information generation unit (515).

10. The information processing system (1) according to any one of claims 2 to 9, wherein
the extraction result acquisition unit (514) is configured to request an external text analysis apparatus external to the information processing system (1) to analyze the text data, the extraction item, and the group to acquire the extraction result.

11. The information processing system (1) according to claim 10, wherein
the extraction result is generated by the external text analysis apparatus from the text data by using a large-scale language model.

12. An information processing apparatus (10) comprising:
an acquisition unit (512) configured to acquire speech uttered by a first participant and a second participant, the first participant and the second participant participating in a communication session;
a text data acquisition unit (513) configured to acquire text data from the speech through speech recognition; and
an extraction result acquisition unit (514) configured to receive a setting of an extraction item to be extracted from the text data and acquire an extraction result obtained by extracting first utterance information related to the extraction item from the text data.

13. An information processing method performed by an information processing apparatus, the information processing method comprising:
acquiring (S5, S22) speech uttered by a first participant and a second participant, the first participant and the second participant participating in a communication session;
acquiring (S6) text data from the speech through speech recognition;
receiving (S7) a setting of an extraction item to be extracted from the text data; and
acquiring (S8, S41) an extraction result obtained by extracting first utterance information related to the extraction item from the text data.

14. Carrier means carrying computer readable code for controlling a computer system to carry out the method of claim 13.
